# EUROPÄISCHE PATENTANMELDUNG

(11) **EP 1 025 905 A1**
(43) Veröffentlichungstag der Anmeldung: **09.08.2000**
(21) Anmeldenummer: 99810088.7
(22) Anmeldetag: 03.02.1999
(51) Int. Cl.: B01L 9/06, B01L 7/02, B01D 1/30, B01D 3/00

(54) **Haltevorrichtung für wenigstens ein Probengefäss in einem Verdampfer und Verdampfungsverfahren**

(71) Anmelder: Büchi Labortechnik AG, CH-9230 Flawil (CH)
(72) Erfinder: Freydl, Ernst Dr., 9011 St. Gallen (CH); Tauer, Andreas Dr., 8040 Zürich (CH); Ziolko, Thomas, 9325 Roggwil (CH)
(74) Vertreter: Müller, Christoph Emanuel

(57) **Zusammenfassung**

Ein Probengefäss mit einer zu verdampfenden Probe wird in einer Haltevorrichtung gehalten. Mit der Haltevorrichtung kann das Probengefäss in einen Verdampfer gestellt werden.

Die Aufnahmeöffnung (3) der Haltevorrichtung (1) weist einen Kühlabschnitt (4) auf, der mit Kühlmitteln versehen ist. Dank der Kühlmittel wird ein genau definierbares Restvolumen (R) im Probengefäss (2) nicht verdampft.

## Beschreibung

Die Erfindung betrifft eine Haltevorrichtung zum Halten von wenigstens einem Probengefäss und ein Verfahren zum Verdampfen von Proben mit den Merkmalen des Oberbegriffs der unabhängigen Patentansprüche.

Beim Verdampfen von Proben in Verdampfern ist es bekannt, am unteren Ende des zur Aufnahme der Probe dienenden Probengefässes einen Nippel anzubringen. Zweck dieses Nippels ist es, ein definierbares Restvolumen der Probe während der Verdampfung zu erzielen.

Beispielsweise aus EP 501 665 ist ein solcher Behälter bekannt, welcher gleichzeitig mit einem Sensor versehen ist. Der Sensor dient zum Beenden der Verdampfung, sobald das Restvolumen erreicht ist.

Ausserdem sind unter der Bezeichnung "Rapid Vap" der Firma Labconco Verdampfer bekannt, welche Probengefässe verwenden, die einen Nippel zum Definieren eines Restvolumens aufweisen. Der Probenbehälter wird im Bereich des Nippels nicht beheizt, so dass die Verdampfung dort geringer ist.

Die erstgenannte Lösung ist aber mit dem Nachteil behaftet, dass ein Sensor und entsprechende Elektronik zum Betrieb der Anlage notwendig ist. Ein solcher Verdampfer ist deshalb aufwendig in Herstellung und Betrieb und entsprechend teuer.

Die zweitgenannte Lösung ist mit dem Nachteil behaftet, dass immer ein bestimmter Wärmeübertrag von den beheizten Regionen des Probengefässes in den nicht beheizten Nippel erfolgt.

Ausserdem erwärmt sich die Luft, welche den Nippel umgibt. Auch aufgrund dieser Tatsache wird der Nippel beheizt. Schliesslich hängt die Temperatur des Nippels von der Temperatur der Umgebungsluft ab, sodass im Betrieb des Verdampfers nicht immer die gleichen Bedingungen herrschen.

Probengefässe würden üblicherweise in einer Halterung gehalten, mittels welcher sie in einen Verdampfer hineingestellt werden können. Es sind in der Art von Racks ausgebildete Halterungen bekannt, welche die gleichzeitige Aufnahme mehrerer Probenbehälter erlauben.

Es ist eine Aufgabe der vorliegenden Erfindung, die Nachteile des Bekannten zu vermeiden, insbesondere eine Haltevorrichtung zum Halten von Probengefässen zu schaffen, welche das Verdampfen der Probe bis auf ein genau vordefinierbares Restvolumen erlauben. Die Haltevorrichtung soll in einem herkömmlichen Verdampfer ohne aufwendige zusätzliche Vorkehrungen verwendbar sein. Eine weitere Aufgabe der Erfindung besteht darin, ein Verfahren zum Verdampfen einer Probe zu schaffen, welches die Verdampfung bis auf ein vorbestimmbares Restvolumen im Probenbehälter erlaubt.

Erfindungsgemäss werden diese Aufgaben mit einer Haltevorrichtung und mit einem Verfahren mit den Merkmalen des kennzeichnenden Teils der unabhängigen Patentansprüche gelöst.

Die Haltevorrichtung zum Halten wenigstens eines Probengefässes in einen Verdampfer ist mit wenigstens einer Aufnahmeöffnung versehen. Das Probengefäss ist in die Aufnahmeöffnung einsetzbar. Typischerweise ist die Haltevorrichtung als Rack ausgebildet, das zur Aufnahme von beispielsweise 6 oder auch mehr Probengefässen dient.

Um jederzeit eine Verdampfung bis auf ein genau vorbestimmbares Restvolumen sicherzustellen, ist die Aufnahmeöffnung in einem Kühlabschnitt mit Kühlmitteln versehen. Dank der Kühlmittel kann die Temperatur im Kühlabschnitt auf einen vorbestimmbaren Wert eingestellt werden. Die Verdampfung der Probe im Bereich des Kühlabschnitts wird damit vermieden. Im Bereich des Kühlabschnitts wird also ein genau vorbestimmbares Restvolumen der Probe nicht verdampft.

Eine aktive Kühlung hat den Vorteil, dass Wärmeübergänge von beheizten Abschnitten der Haltevorrichtung in den Bereich des Kühlabschnittes vermieden werden.

Die Rahmenbedingungen für die Verdampfung sind ausserdem immer gleich, da die Kühlmittel den Kühlabschnitt unabhängig von der Umgebungstemperatur auf einen vorbestimmbaren Wert kühlen können.

Vorzugsweise ist der Kühlabschnitt in einem Endbereich der Aufnahmeöffnung angeordnet. Damit wird der unterste Teil des Probengefässes gekühlt, so dass im unteren Abschnitt des Probengefässes das Restvolumen verbleibt.

Vorteilhaft verjüngt sich der Querschnitt der Aufnahmeöffnung in deren Endbereich. Die Verjüngung dient zur Aufnahme eines Nippels am unteren Ende des Probengefässes. Das Vorsehen eines Nippels erlaubt es, bei an sich relativ grossem Querschnitt des Probengefässes ein kleines Restvolumen genau einzustellen.

Die Haltevorrichtung ist in einem bevorzugten Ausführungsbeispiel im wesentlichen einstückig aus einem Block aus wärmeleitendem Material gefertigt. Die Aufnahmeöffnungen sind in dem Block angebracht, beispielsweise eingebohrt. Der Block kann beispielsweise aus Aluminium bestehen. Die Haltevorrichtung kann damit in einem Verdampfer direkt auf die Heizplatte gestellt werden. Durch Wärmeübertrag von der Heizplatte auf die Haltevorrichtung wird eine in einem Probengefäss gehaltene Probe durch Einsetzen des Probengefässes in die Aufnahmeöffnung verdampft.

Der Kühlabschnitt kann in diesem Fall durch ein in einen unteren Abschnitt der Aufnahmeöffnung eingesetztes Kühlteil gebildet sein.

Das Kühlteil ist vorteilhaft gegenüber dem geheizten Block thermisch isoliert. Das Kühlteil kann beispielsweise im wesentlichen aus einem Aussenteil und einem Innenteil gebildet sein, zwischen denen ein erster Ringspalt zur Aufnahme eines Kühlmediums gebildet ist. Der erste Ringspalt ist dabei vorteilhaft mit Dichtmitteln, beispielsweise einem O-Ring, gegenüber der Aufnahmeöffnung abgedichtet.

Das Aussenteil kann zur thermischen Isolation des Kühlteils gegenüber der Haltevorrichtung aus Kunststoffmaterial gefertigt sein. Das Innenteil ist vorteilhaft aus Metall gefertigt, damit ein guter Wärmeübertrag zwischen dem im ersten Ringspalt fliessenden Kühlmedium und dem vom Innenteil umgebenen Probengefäss gewährleistet ist.

Vorteilhaft wird ausserdem zwischen dem Kühlteil und dem heizbaren Block ein zweiter Ringspalt gebildet, der zur Aufnahme eines Isolationsmediums dient. Typischerweise ist der zweite Ringspalt mit Luft gefüllt. Das zwischen dem Aussenteil und dem Innenteil fliessende Kühlmedium ist also gegenüber dem beheizten Rest der Haltevorrichtung durch Vorsehen eines zweiten Ringspaltes und durch Bildung des Aussenteils aus einem schlecht wärmeleitenden Material thermisch isoliert.

Die Zufuhr des Kühlmediums in den ersten Ringspalt zwischen dem Innenteil und dem Aussenteil erfolgt vorzugsweise über Kanäle, welche zum Durchführen der Kühlflüssigkeit in dem Block und in dem Aussenteil angebracht sind.

Typischerweise sind im Aussenteil und im Block miteinander fluchtende Bohrungen vorgesehen, welche eine Zu- bzw. eine Ableitung für das Kühlmedium bilden. Sofern ein zweiter Ringspalt zum Bilden einer Isolation vorgesehen ist, kann dieser mit Verbindungsröhrchen überbrückt werden.

Zwischen dem Kühlteil und dem Block können ausserdem ebenfalls Dichtmittel zum Abdichten eines allfälligen zweiten Ringspalts gegen die Aufnahmeöffnung hin vorgesehen sein.

Die Dichtmittel, welche den ersten bzw. den zweiten Ringspalt abdichten, sind insbesondere dann vorteilhaft, wenn der Aussendurchmesser des Probengefässes kleiner als der freie Innendurchmesser der Aufnahmeöffnung gewählt wird. In diesem Fall kann in den dadurch gebildeten dritten Ringspalt ein Medium beigefügt werden, welches den Wärmeübertrag zwischen dem beheizten Teil der Halterung und des Probenbehälters erhöht. Typischerweise kann Wasser eingesetzt werden.

Die Haltevorrichtung bzw. der mit der Haltevorrichtung bestückte Verdampfer kann ausserdem mit Mitteln zum Messen und zum Einstellen der Temperatur des Kühlmediums versehen sein. Auf diese Weise kann die Temperatur im Bereich des Kühlabschnitts innerhalb vorbestimmter Toleranzwerte gehalten werden.

Das erfindungsgemässe Verfahren zeichnet sich dadurch aus, dass ein Probengefäss, welches eine zu verdampfende Probe enthält während der Verdampfung in einem ein Restvolumen definierenden Bereich aktiv gekühlt wird.

Die Erfindung wird im folgenden in Ausführungsbeispielen und anhand der Zeichnungen näher erläutert. Es zeigen:
- Figur 1: einen Querschnitt durch eine erfindungsgemässe Haltevorrichtung mit eingesetztem Probengefäss,
- Figur 2: eine schematische Darstellung einer Haltevorrichtung zur Aufnahme mehrerer Probengefässe,
- Figur 3: eine vergrösserte Darstellung des Kühlabschnitts der Haltevorrichtung nach Figur 1 im Querschnitt und
- Figur 4: einen Schnitt durch die Haltevorrichtung gemäss Figur 1 entlang der Ebene B-B.

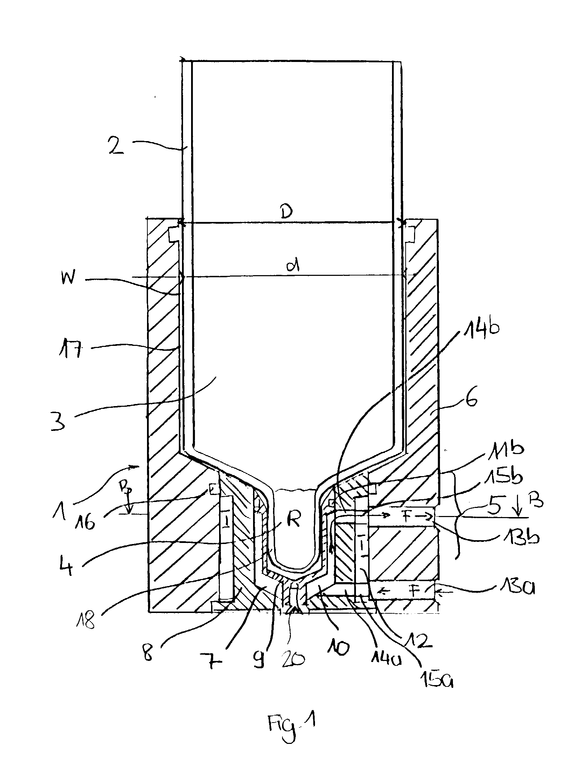

Figur 1 zeigt eine Haltevorrichtung 1 im Querschnitt. Die Haltevorrichtung 1 besteht im wesentlichen aus einem Block 6, der beispielsweise aus Aluminium gefertigt ist.

Im Block 6 sind Aufnahmeöffnungen 3 angebracht, die zum Einsetzen eines Probengefässes 2 dienen. Zum Verdampfen wird eine Probe in das Probengefäss 2 gegeben, welches in die Aufnahmeöffnung 3 eingesetzt wird.

Zum Verdampfen der im Probengefäss 2 gehaltenen Probe kann der Block 6 auf eine Heizplatte eines Verdampfers (nicht gezeigt) gestellt und dadurch erwärmt werden.

In einem Endbereich 5 der Aufnahmeöffnung 3 ist ein Kühlabschnitt 4 vorgesehen. Im Kühlabschnitt 4 verjüngt sich der Querschnitt der Aufnahmeöffnung 3. Die Verjüngung dient zur Aufnahme eines am unteren Ende des Probengefässes 2 angebrachten Nippels 18. Im Nippel 18 soll während der Verdampfung ein Teil der Probe als nicht verdampftes Restvolumen R verbleiben.

Der Kühlabschnitt 4 ist durch ein in die Aufnahmeöffnung 3 eingesetztes Kühlteil 7 gebildet, das zum Kühlen des Kühlabschnitts 4 und des Nippels 18 dient.

Das Kühlteil 7 besteht im wesentlichen aus einem Aussenteil 8 und einem Innenteil 9.

Das Aussenteil ist aus Kunststoffmaterial, beispielsweise Polypropylen gefertigt. Das Innenteil 9 besteht aus Metall, beispielsweise aus Aluminium.

Zwischen dem Aussenteil 8 und dem Innenteil 9 ist ein erster Ringspalt 10 gebildet. Der Ringspalt 10 dient zur Aufnahme einer Kühlflüssigkeit F. Die Kühlflüssigkeit F kühlt das Innenteil 9 und damit den in das Innenteil hineinragenden Nippel 18 des Probengefässes 2.

Das Aussenteil 8 und das Innenteil 9 sind beispielsweise mit einer Schraube 20 miteinander verschraubt.

Zwischen dem Aussenteil 8 und dem Block 6 ist ein zweiter Ringspalt 12 vorgesehen. Der zweite Ringspalt 12 ist mit Luft I gefüllt. Die Luft I im zweiten Ringspalt dient zur thermischen Isolation des Kühlteils 7 gegenüber dem Block 6. Die Konstruktion des Aussenteils aus Kunststoffmaterial dient ebenfalls zur thermischen Isolation.

Die Kühlflüssigkeit F wird über eine Bohrung 13a im Block 6 und durch eine Bohrung 14a im Aussenteil 8 in den ersten Ringspalt 10 geleitet. Der zweite Ringspalt 12 wird mit einem Verbindungsröhrchen 15a überbrückt, welches die Bohrung 13a mit der Bohrung 14a verbindet.

Die Ableitung der Kühlflüssigkeit aus dem ersten Ringspalt 10 erfolgt in ähnlicher Weise durch eine Bohrung 14b im Aussenteil 8, ein Verbindungsröhrchen 15b und einer Bohrung 13b im Block 6.

Durch kontinuierliche Zirkulation des Kühlmediums F durch den Ringspalt 10 wird das Probengefäss 2 im Bereich des Nippels 18 gekühlt. In diesem Bereich erfolgt deshalb keine Verdampfung, so dass ein genau definierbares Restvolumen R der Probe verbleibt.

Zur Erhöhung des Wärmeübertrags zwischen dem Block 6 und dem oberen Abschnitt des Probengefässes 2 ist der Zwischenraum zwischen der Aussenwand des Probengefässes 2 und der die Aufnahmeöffnung 3 bildenden Innenwand 17 des Blocks 6 mit einem Medium gefüllt, welches den Wärmeaustausch verbessert, beispielsweise Wasser W. Dazu wird bewusst der äussere Durchmesser d des Probengefässes 2 kleiner gewählt als der freie Innendurchmesser D der Aufnahmeöffnung 3.

Um ein Eintreten des Wassers W in den ersten Ringspalt 10 bzw. in den zweiten Ringspalt 12 zu vermeiden, sind Dichtungsmittel vorgesehen.

Ein erster O-Ring 11 ist zum Abdichten des ersten Ringspalts 10 gegenüber der Aufnahmeöffnung 3 vorgesehen. Ein zweiter O-Ring 16 dichtet den zweiten Ringspalt 12 gegenüber der Aufnahmeöffnung 3, insbesondere gegenüber dem zwischen dem Probengefäss 2 und der Innenwand der Aufnahmeöffnung 3 gebildeten dritten Ringspalt 17 ab.

Als Kühlmedium wird vorteilhaft ebenfalls Wasser verwendet. Zum Kühlen kann ein handelsübliches Kühlaggregat mit einer Umwälzpumpe ausserhalb der Haltevorrichtung verwendet werden. Typischerweise werden im Betrieb 1000 ml Kühlflüssigkeit mit einer Temperatur von 10 °C pro Stunde zirkuliert. Die Haltevorrichtung 1 weist typischerweise mehrere Aufnahmeöffnungen 3 zur Aufnahme von Probengefässen 2 auf, die identisch der in Figur 1 gezeigten Aufnahmeöffnung 3 ausgebildet sind.

In Figur 2 ist schematisch eine Haltevorrichtung 1 gezeigt, welche aus einem Block 6 gebildet ist, der eine Vielzahl von Aufnahmeöffnungen 3 zur Aufnahme von Probengefässen 2 aufweist. Ein einzelnes Probengefäss 2 ist in Figur 2 in eine Öffnung eingesetzt dargestellt.

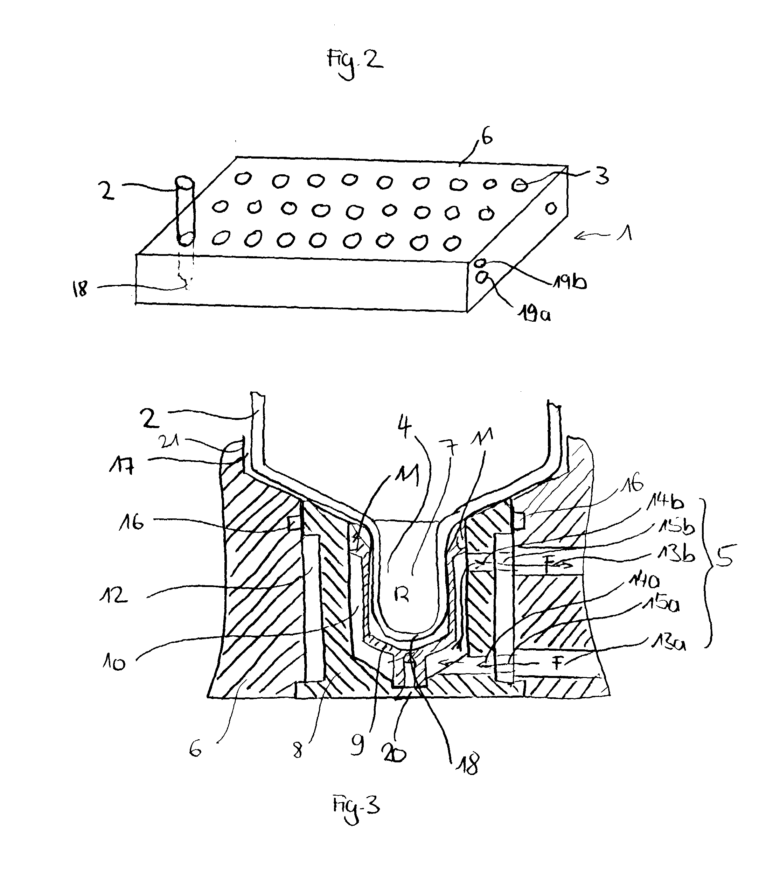

Figur 3 zeigt einen vergrösserten Ausschnitt der Darstellung aus Figur 1, insbesondere im Bereich des Kühlteils 7. Das Kühlteil 7 definiert einen Kühlabschnitt 4, welcher sich in einem Endabschnitt 5 der Aufnahmeöffnung 3 befindet.

Das Kühlmedium F fliesst durch den ersten Ringspalt 10 und kühlt dabei das Innenteil 9 so ab, dass auch der vom Innenteil 9 umgebene Nippel 18 gekühlt wird. Dadurch wird die Verdampfung des Restvolumens R vermieden.

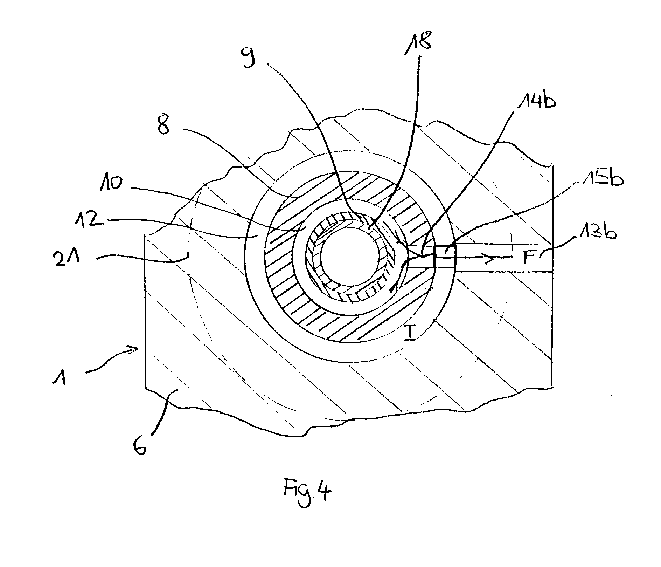

In Figur 4 ist ein Schnitt durch die Haltevorrichtung 1 im Bereich des Kühlteils 7, entlang der Ebene B-B aus Figur 1 gezeigt.

Im Endbereich 5 der Aufnahmeöffnung 3 im Block 6 ist das Kühlteil 7 angebracht (siehe Figuren 1 und 3). Das Kühlteil 7 besteht aus dem Aussenteil 8 und dem Innenteil 9, zwischen welchen ein erster Ringspalt 10 gebildet wird.

Ein zweiter Ringspalt 12 wird zwischen der im Endbereich 5 verjüngten Aufnahmeöffnung 3 und dem Aussenteil 8 gebildet.

Durch eine Bohrung 13b im Block 6, welcher über ein Verbindungsröhrchen 15b mit einer Bohrung 14b im Aussenteil 8 verbunden ist, wird die Kühlflüssigkeit F aus dem ersten Ringspalt 10 abgeführt. Durch die Kühlflüssigkeit F wird das Innenteil 9 und damit der die Innenfläche des Innenteils 9 berührende Nippel 18 gekühlt.

Der zweite Ringspalt 12 ist mit Luft I zur thermischen Isolation gefüllt.

In Figur 4 ist in gestrichelten Linien ausserdem die Innenfläche 21 der Aufnahmeöffnung 3 oberhalb der Verjüngung gezeigt.

## Patentansprüche

1. Haltevorrichtung (1) zum Halten von wenigstens einem Probengefäss (2) in einen Verdampfer,
mit wenigstens einer Aufnahmeöffnung (3), in welche das Probengefäss (2) einsetzbar ist,
dadurch gekennzeichnet, dass die Aufnahmeöffnung (3) in einem Kühlabschnitt (4) mit Kühlmitteln (7, 8, 9, 10) versehen ist.

2. Haltevorrichtung nach Anspruch 1, dadurch gekennzeichnet, dass der Kühlabschnitt (4) in einem Endbereich (5) der Aufnahmeöffnung (3) angeordnet ist.

3. Haltevorrichtung nach Anspruch 2, dadurch gekennzeichnet, dass der Querschnitt der Aufnahmeöffnung (3) sich im Endbereich (5) verjüngt.

4. Haltevorrichtung nach einem der Ansprüche 1 bis 3, dadurch gekennzeichnet, dass die Haltevorrichtung im wesentlichen einstückig aus einem Block (6) aus wärmeleitendem Material ausgebildet ist, und dass der Kühlabschnitt (4) durch ein in die Aufnahmeöffnung (3) eingesetztes Kühlteil (7) gebildet ist.

5. Haltevorrichtung nach Anspruch 4, dadurch gekennzeichnet, dass das Kühlteil (7) gegenüber dem Block (6) thermisch isoliert ist.

6. Haltevorrichtung nach Anspruch 4 oder 5, dadurch gekennzeichnet, dass das Kühlteil (7) im wesentlichen aus einem Aussenteil (8) und einem Innenteil (9) besteht, zwischen denen ein erster Ringspalt (10) zur Aufnahme eines Kühlmediums (F) gebildet ist, wobei der erste Ringspalt (10) vorzugsweise mit Dichtmitteln (11) gegenüber der Aufnahmeöffnung (3) abgedichtet ist.

7. Haltevorrichtung nach einem der Ansprüche 4 bis 6, dadurch gekennzeichnet, dass zwischen dem Kühlteil (7) und dem Block (6) ein zweiter Ringspalt (12) gebildet ist, der zur Aufnahme eines Isolationsmediums (I), insbesondere von Luft dient.

8. Haltevorrichtung nach einem der Ansprüche 1 bis 7, dadurch gekennzeichnet, dass in der Haltevorrichtung (1) Kanäle (13a, 13b, 14a, 14b, 15a, 15b) zum Durchführen einer Kühlflüssigkeit angebracht sind.

9. Haltevorrichtung nach einem der Ansprüche 6 bis 8, dadurch gekennzeichnet, dass im Block (6) und im Aussenteil (8) miteinander fluchtende Bohrungen (13a, 13b, 14a, 14b) zum Bilden einer Zu- bzw. einer Ableitung für das Kühlmedium (F) vorgesehen sind, wobei im Fall eines zweiten Ringspalts (12) nach Anspruch 7 dieser mit Verbindungsröhrchen (15) überbrückt ist.

10. Haltevorrichtung nach einem der Ansprüche 4 bis 9, dadurch gekennzeichnet, dass zwischen dem Kühlteil (7) und dem Block (6) Dichtmittel (16) zum Abdichten des zweiten Ringspalts (12) gegen die Aufnahmeöffnung (3) vorgesehen sind.

11. Haltevorrichtung nach einem der Ansprüche 1 bis 10, mit einem Probengefäss (2), welches in die Aufnahmeöffnung (3) eingesetzt oder einsetzbar ist,
dadurch gekennzeichnet, dass der äussere Durchmesser (D) des Probengefässes (2) und der freie Innendurchmesser (d) der Aufnahmeöffnung (3) derart gewählt ist, dass zwischen dem Probengefäss (2) und der Innenfläche (21) der Aufnahmeöffnung (3) ein dritter Ringspalt (17) zur Aufnahme eines die Wärmeübertragung erhöhenden Mediums (W) vorgesehen ist.

12. Haltevorrichtung nach einem der Ansprüche 1 bis 11, dadurch gekennzeichnet, dass Mittel zum Messen und zum Einstellen der Temperatur des Kühlmediums (F) vorgesehen sind.

13. Verfahren zum Verdampfen einer Probe in einem Probengefäss (2), insbesondere in einer Haltevorrichtung nach einem der Ansprüche 1 bis 12, dadurch gekennzeichnet, dass das Probengefäss (2) während der Verdampfung in einem ein Restvolumen (R) definierenden Bereich aktiv gekühlt wird.
